# DEMANDE DE BREVET EUROPEEN

(11) **EP 2 472 925 A1**
(43) Date de publication de la demande: **04.07.2012**
(21) Numéro de dépôt: 11305006.6
(22) Date de dépôt: 03.01.2011
(51) Int. Cl.: H04W 8/26

(54) **Procédé de transmission de données dans un réseau de télécommunications cellulaire**

(71) Demandeur: Gemalto SA, 92190 Meudon (FR)
(72) Inventeur: Gros, Jean-François, 13012, Marseille (FR)

(57) **Abrégé**

L'invention concerne un procédé de transmission de données dans un réseau (23) de télécommunications cellulaire. Les données sont transmises entre le réseau et des terminaux (20₁,20₂,20ₙ) comprenant chacun un UICC (22₁,22₂,22ₙ) renfermant un identifiant (IMSI).
Selon l'invention, les identifiants des UICC d'une pluralité des terminaux sont identiques et le procédé consiste à transmettre les données à l'aide d'un discriminant permettant d'identifier chacun des terminaux de manière univoque.
Selon des differents modes de réalisation, le discriminant peut être un créneau temporel, un identifiant du terminal (IMEI), l'identité de la cellule dans laquelle est situé ledit terminal.

## Description

Le domaine de l'invention est celui des radiocommunications à l'aide de terminaux embarquant des fonctionnalités SIM (pour " Subscriber Identity Module " ou " Module d'Identification de l'Abonné ").

L'invention s'applique notamment aux échanges avec des terminaux associés à des équipements distants de mesure, détection, traitement... (appelés également, en anglais communications " Machine To Machine " ou communications " M2M ").

Les communications M2M sont par exemple mises en oeuvre pour contrôler des machines distantes, par exemple des compteurs à gaz, des détecteurs de fuite de gaz ou de liquides, des détecteurs de niveau d'eau, des distributeurs automatiques, ou bien d'autres machines tels que des véhicules automobiles.

Classiquement, une fonctionnalité SIM est embarquée dans une puce comprise sur une carte SIM qui est un élément externe et amovible par rapport au terminal de communication auquel elle est associée. Elle a en effet pour objectif d'identifier un " abonné ", qui peut être conduit à changer de terminal sans vouloir changer son identifiant associé à la carte SIM. Celle-ci est donc disposée dans un logement prévu dans le terminal de communication. La carte SIM peut être changée physiquement dans la vie du terminal, par exemple afin d'obtenir plus de fonctionnalités ou pour changer d'opérateur.

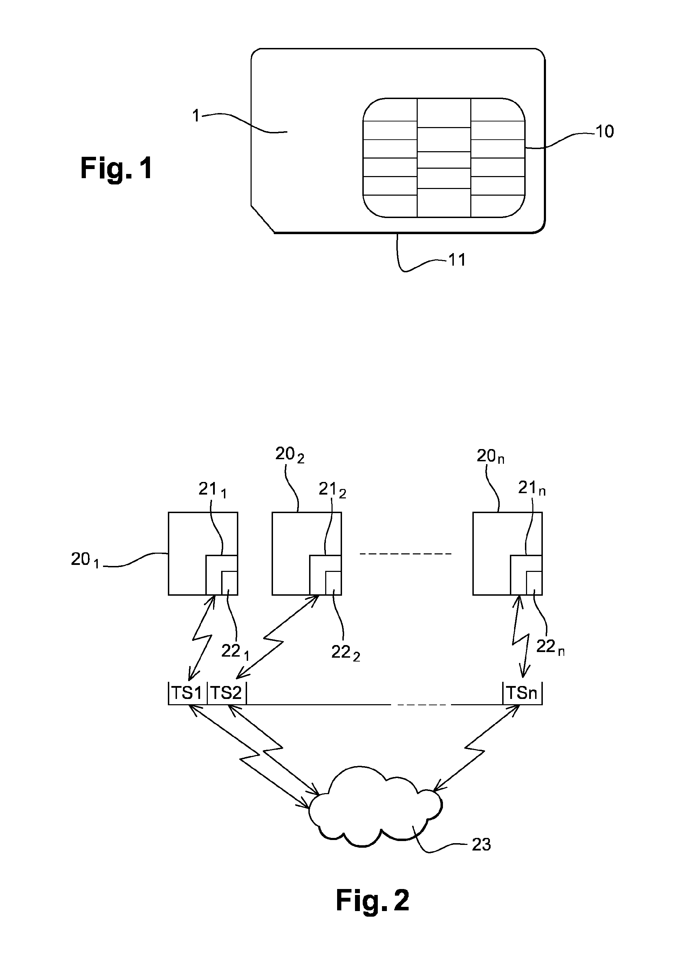

On présente, en relation avec la figure 1, un exemple de carte SIM classique. La puce 10 de la carte SIM 1 est disposée sur un substrat isolant 11.

Pendant la production des cartes SIM, dans une phase appelée personnalisation de la carte SIM, le fabricant procède à la mise en place dans la carte SIM des fonctions demandées par l'opérateur ainsi qu'au stockage des paramètres de l'opérateur (par exemple des clés secrètes, des algorithmes de cryptage,...).

Dans le cadre d'applications M2M, les modules de communication sont souvent :
- enfouis dans des équipements plus complexes (on peut citer par exemple le cas des modules enfouis dans une voiture ou une machine) ;
- enfouis et difficilement accessibles (on peut citer le cas des compteurs d'eau dans des zones géographiques reculées) ;
- soumis à des environnements hostiles en termes notamment de température, d'humidité ou de vibrations.

Ainsi, dans le domaine des communications M2M, les cartes SIM sont un maillon faible du dispositif de communication notamment du fait que les contraintes environnementales ne sont généralement pas supportées par les packagings standards des cartes SIM. En tout état de cause, la qualité du montage et des connexions est inférieure à celle de l'ensemble des autres composants du terminal.

Par ailleurs, les cartes SIM imposent une accessibilité au logement destiné à la recevoir. Cette accessibilité nécessaire peut complexifier sensiblement la réalisation du terminal et donc le rendre plus coûteux.

Dans le cadre de communications M2M, il a donc été préféré d'intégrer physiquement la fonctionnalité SIM dans une puce soudée directement sur un substrat, tel qu'un circuit imprimé d'un modem radio relié à la machine dont on veut contrôler ou piloter l'état. La « carte SIM » est ainsi solidarisée de façon définitive à un support relié au terminal de télécommunications et n'est plus accessible. On peut dès lors parler d'une SIM électronique (e-SIM) et non plus physique.

La présente invention s'applique notamment dans ce cadre de fonctionnalité SIM embarquée de manière fixe dans un terminal. Une fonctionnalité SIM embarquée dans un terminal, qu'elle soit ou non extractible de ce terminal, sera dans la suite de cette description appelée UICC (Universal Integrated Circuit Card).

Une des caractéristiques des communications M2M est que ce type de communications entre des machines embarquant des UICC et un réseau cellulaire de type GSM, 3G, LTE, etc...est amené à énormément s'amplifier dans les années à venir, afin de contrôler ou de vérifier à distance l'état de machines, compteurs, véhicules, alarmes, etc.

Le document présent à l'adresse http://www.efort.com/r_tutoriets/GStvt1_EFORT.pdf décrit un réseau cellulaire de type GSM et est incorporé ici par référence.

A chaque UICC est traditionnellement associé un abonnement géré par l'opérateur du réseau de télécommunications. Le problème qui se pose est alors l'enregistrement de chaque UICC (abonnement) au niveau du HLR (Home Location Register) du réseau de l'opérateur. En effet, chaque UICC est identifié au niveau du réseau par un identifiant, appelé IMSI, qui est unique. A cet IMSI est associé un MSISDN qui permet à un élément externe au réseau de l'operateur d'appeler cet IMSI. Dans les applications M2M, le réseau identifie le terminal avec lequel il communique grâce à cet IMSI, puisque l'UICC renferme l'IMSI et est solidaire du terminal. Plus le nombre de terminaux communiquant en M2M est important, plus le nombre d'IMSI et de MSISDN est important. Or, l'inscription d'un IMSI dans le HLR d'un opérateur est payante (le fabricant de HLR facture l'opérateur pour chaque IMSI enregistrée dans ce HLR et facture également des coûts de maintenance) et le nombre d'IMSI et de MSISDN à enregistrer dans les applications M2M peut être très important. A titre d'exemple, si l'on souhaite que chaque feu rouge (par exemple situé à un croisement de routes) dans un pays tel que la France soit doté d'un modem permettant de connaître l'état de son fonctionnement (ampoule défectueuse et donc à changer), il serait nécessaire de prévoir plusieurs millions d'IMSI différents et donc de payer le fabricant de HLR à hauteur de ces millions d'enregistrements. Il en est de même des systèmes de contrôle des infractions routières qui, par exemple au niveau de ces croisements et à l'aide de caméras, photographient les véhicules ayant brûlé un feu rouge. Les photographies des véhicules contrevenants sont stockées dans une mémoire et il est périodiquement nécessaire, au niveau du réseau, de télécharger les photographies prises des véhicules ayant commis des infractions, afin d'adresser par la suite des procès-verbaux aux propriétaires de ces véhicules. Au vu du nombre croissant d'infractions constatées, le nombre de caméras de surveillance ne cesse d'augmenter et affecter un IMSI à chaque caméra opérationnelle devient de plus en plus coûteux au niveau des HLR. Il faut également prendre en compte le fait que le nombre d'IMSI et de MSISDN est limité et également que les MSISDN peuvent être payants.

La présente invention a pour objectif de remédier à ces inconvénients.

À cet effet la présente invention propose différentes solutions permettant de drastiquement limiter le nombre d'IMSI et de MSISDN à utiliser dans le cadre d'applications M2M.

L'invention propose un procédé de transmission de données dans un réseau de télécommunications cellulaire, les données étant transmises entre le réseau et des terminaux comprenant chacun un UICC renfermant un identifiant (IMSI). Selon l'invention, les identifiants des UICC d'une pluralité des terminaux sont identiques et le procédé consiste à transmettre les données à l'aide d'un discriminant permettant d'identifier chacun des terminaux de manière univoque.

Ainsi, la discrimination des UICC est réalisée non plus sur la base de l'identifiant de l'UICC (l'IMSI), mais sur la base d'un autre discriminant.

Dans un premier mode de mise en oeuvre du procédé selon l'invention, le discriminant est temporel, à chaque UICC étant affecté un créneau temporel pendant lequel il communique avec le réseau.

Afin de synchroniser temporellement les terminaux, un signal temporel est préférentiellement transmis à chaque terminal pendant le créneau temporel affecté de manière univoque à ce terminal.

Alternativement, la synchronisation temporelle des terminaux consiste à transmettre ce signal temporel pendant un intervalle de temps pendant lequel les UICC sont tous activés simultanément. Un intervalle de temps est donc dédié à la synchronisation des terminaux.

Dans un deuxième mode de mise en oeuvre du procédé selon l'invention, le discriminant est un identifiant du terminal, par exemple son IMEI.

Dans un troisième mode de mise en oeuvre du procédé selon l'invention, le discriminant est un identifiant du modem auquel est connecté chaque UICC, le modem communiquant avec le terminal.

L'identifiant d'un terminal donné peut être un nombre, un fichier ou une application permettant de le distinguer d'un autre terminal.

Dans un quatrième mode de mise en oeuvre du procédé selon l'invention, le discriminant est l'identité de la cellule dans laquelle est situé le terminal, chaque cellule du réseau ne comportant qu'un terminal comprenant un UICC ayant le même identifiant.

Dans ce quatrième mode de mise en oeuvre, le procédé de transmission dans le sens montant consiste à transmettre vers le réseau à partir de chaque UICC l'identité de la cellule dans lequel se situe cet UICC et à identifier chacun des UICC au niveau du réseau à partir de l'identité de cellule transmise.

Dans ce quatrième mode de mise en oeuvre, le procédé de transmission dans le sens descendant consiste à transmettre une requête à partir du réseau vers tous les UICC d'une même cellule, la requête comprenant un identifiant d'un UICC, et à répondre à cette requête par l'UICC ayant l'identifiant correspondant.

Alternativement, une requête peut être transmise à partir du réseau vers tous les UICC d'une pluralité de cellules, la requête comprenant une identité de cellule. L'UICC situé dans la cellule ayant l'identité de cellule correspondante répond alors à cette requête.

L'invention s'applique de préférence aux UICC intégrés de manière fixe dans des terminaux.

La présente invention sera mieux comprise la lecture de la description suivante de plusieurs modes de réalisation, donnés à titre illustratif et non limitatif, et des figures annexées dans lesquelles :
- la figure 1 représente une carte Sim;
- la figure 2 représente un système de transmission de données selon un premier mode de mise en oeuvre de l'invention ;
- la figure 3 représente un système de transmission de données selon un deuxième mode de mise en oeuvre de l'invention ;
- la figure 4 représente des cellules d'un réseau cellulaire, utilisées pour la mise en oeuvre d'un troisième mode de réalisation de l'invention.

La figure 1 a été décrite en référence à l'état de la technique.

L'invention propose un procédé de transmission de données dans un réseau de télécommunications cellulaire, les données étant transmises entre le réseau et des terminaux comprenant chacun un UICC renfermant un identifiant (IMSI).

Selon l'invention, les identifiants des UICC d'une pluralité des terminaux sont identiques et le procédé consiste à transmettre les données à l'aide d'un discriminant permettant d'identifier chacun des terminaux de manière univoque. Par univoque on entend de manière certaine, sans qu'il ne puisse y avoir d'ambiguïté.

La figure 2 représente un système de transmission de données selon un premier mode de mise en oeuvre de l'invention.

Cette première solution est basée sur la constatation que les terminaux renfermant les différents UICC ne nécessitent pas de connexion prolongée avec le réseau mais n'ont en général à communiquer avec ce réseau que de manière très épisodique. À titre d'exemple, un feu rouge n'a par exemple besoin de communiquer son état au réseau qu'une fois par mois et cette communication n'excède pas une durée d'une minute tout au plus. Il est dès lors financièrement prohibitif d'affecter à chaque feu rouge une IMSI, sachant que ce terminal ne communiquera avec le réseau que pendant une durée très courte.

Plusieurs terminaux 20₁, 20₂, 20ₙ sont ici représentés. Chaque terminal est connecté à un modem 21₁, 21₂, 21ₙ connecté à une UICC 22₁, 22₂, 22ₙ. Les terminaux peuvent être au nombre de plusieurs milliers voire plusieurs millions et sont destinés à communiquer, à l'aide des modems 21₁, 21₂, 21ₙ, avec un réseau de télécommunications cellulaire 23. Chaque UICC 22₁, 22₂, 22ₙ comporte un identifiant, par exemple un IMSI, permettant de s'identifier auprès du réseau 23.

Selon ce premier mode de réalisation, les identifiants des UICC 22₁, 22₂, 22ₙ des terminaux 20₁, 20₂, 20ₙ sont parfaitement identiques, c'est-à-dire qu'ils correspondent à un seul et même abonnement (même identifiant IMSI et même clé de cryptage Ki). Au niveau de la fabrication de telles UICC, ceci revient à tout simplement fabriquer des UICC identiques en tous points. Au niveau du HLR du réseau 23, un unique IMSI est enregistré pour l'ensemble des terminaux. Afin de distinguer à un moment donné l'UICC (et donc le terminal correspondant) qui communique avec le réseau 23, il est affecté à chaque UICC un créneau temporel pendant lequel il est autorisé à communiquer avec le réseau 23. Cette autorisation consiste par exemple à n'activer (alimenter) un modem que pendant un intervalle de temps. L'activation du modem provoque une initialisation de l'UICC qui transmet alors des informations au réseau et est également capable d'en recevoir, par exemple via SMS ou un canal IP.

A titre d'exemple, l'UICC 22₁ communique avec le réseau pendant un créneau temporel TS1, ce créneau temporel lui étant alloué. L'UICC 22₂ communique avec le réseau 23 pendant l'intervalle de temps suivant TS2, jusqu'à l'UICC 22ₙ pendant l'intervalle de temps TSₙ. Pour ces communications, les modems ou les UICC sont synchronisés temporellement les uns par rapport aux autres, afin qu'un UICC donné ne communique pas avec le réseau pendant qu'un autre UICC est en communication avec ce dernier. Le réseau réalise la discrimination entre les UICC sur une base temporelle : il sait que pendant le créneau temporel TSᵢ, le terminal 20ᵢ lui communiquera ses données.

A titre d'exemple, l'UICC 22₁ communique avec le réseau de 12h00 à 12h01, l'UICC 22₂ de 12h01 à 12h02, etc. Pour une communication mensuelle d'une minute par UICC (ce qui est bien plus long que nécessaire dans de nombreuses applications M2M), il est donc possible d'établir plus de 43.000 (60*24*30) communications sur la base d'un seul identifiant, et donc d'un seul IMSI. Sur cette base ci, l'invention permet donc de diviser par 43.000 le prix de l'enregistrement d'IMSI au niveau du HLR.

Les UICC 22ᵢ sont pilotés par des horloges intégrées dans les modems 21ᵢ dans lesquels ils sont intégrés. Au moment où ces modems détectent qu'ils doivent entrer en communication avec le réseau 23, ils réinitialisent les UICC correspondants pour qu'ils entrent en communication avec le réseau 23.

Durant un créneau temporel donné, le réseau 23 peut également envoyer des données et/ou programmes à un UICC 22ᵢ. Ces données comprennent par exemple une donnée horaire permettant à l'UICC/modem de se resynchroniser temporellement afin de pallier à des éventuelles dérives temporelles.

Il est également possible de prévoir un intervalle de temps commun à tous les UICC pendant lequel ils sont tous synchronisés simultanément par le réseau et/ou on leur envoie un programme ou des données (campagne de téléchargement).

Durant une communication avec un UICC, il est également possible de rallonger ou raccourcir la durée de l'intervalle de temps suivant pendant lequel il entrera en communication avec le réseau. On obtient ainsi des créneaux temporels dynamiques. De telles modifications d'intervalles de temps futurs peuvent également être réalisées durant un intervalle de temps pendant lequel tous les UICC sont en réception simultanément. Par exemple, on indiquera pendant cet intervalle de temps que la durée d'une minute précitée passera à l'avenir à 30 secondes.

On notera dans ce premier mode de réalisation que les communications entre le réseau et les UICC peuvent être montantes et/ou descendantes. Par montante on entend d'un UICC à la fois vers le réseau, pendant l'intervalle de temps alloué à cet UICC, et par descendante on entend du réseau vers une UICC donnée ou vers toutes les UICC simultanément.

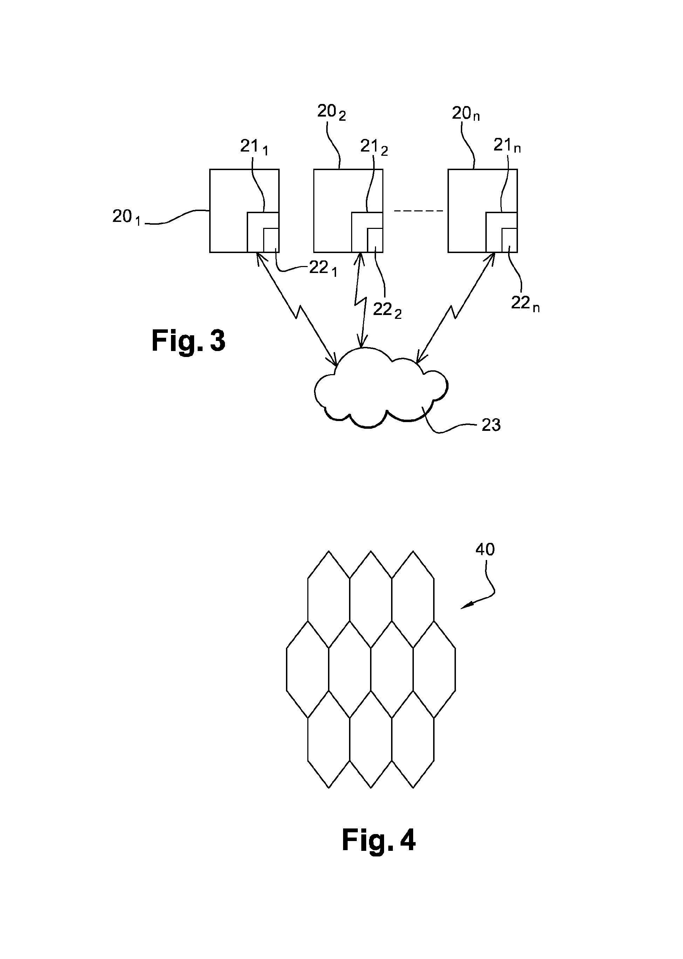

La figure 3 représente un système de transmission de données selon un deuxième mode de mise en oeuvre de l'invention.

Dans ce deuxième mode de mise en oeuvre, il n'y a pas de synchronisation temporelle entre les différents terminaux. Chaque terminal 20ᵢ renferme un identifiant de terminal, par exemple un IMEI (International Mobile Equipment Identity) et les identifiants des UICC compris dans les différents terminaux sont identiques (conformément au premier mode de réalisation). Chaque UICC, pendant sa communication avec le réseau, transmet également l'identifiant du terminal qui le comprend. Le réseau comprend des moyens pour discriminer les UICC appelants sur la base des identifiants de terminaux. Il est important de noter qu'un identifiant du modem d'un terminal peut également remplacer ou constituer l'identifiant de ce terminal, puisque le modem est intégré au terminal. Pour des soucis de simplification, on parlera par la suite de manière générique d'un identifiant de terminal, celui-ci incluant l'identifiant du terminal lui-même (machine, véhicule, ...) ou du modem qui lui sert de moyen de communication avec le réseau, sachant que le terminal, le modem et l'UICC communiquent entre eux.

Ainsi, la discrimination des UICC appelants est réalisée sur la reconnaissance des identifiants de terminaux, un UICC appelant transmettant non seulement son identifiant (IMSI) mais également un identifiant du terminal 20ᵢ qui le renferme. Si plusieurs UICC tentent de communiquer simultanément avec le réseau 23, ce dernier peut prendre plusieurs mesures:
- mettre un ou plusieurs appels en attente et traiter en priorité un des appels ;
- ne traiter que le premier appel entrant et rejeter les autres appels jusqu'au traitement définitif du premier appel;
- ne traiter que le premier appel entrant et transmettre un message de mise en attente aux autres appels. Ce message de mise en attente peut par exemple consister à indiquer à quel moment chaque UICC pourra tenter de se reconnecter au réseau. L'adressage des UICC est réalisé sur la base de l'identifiant du terminal appelant.

Par extension, on peut considérer qu'un identifiant d'un terminal est un discriminant permettant d'identifier de manière certaine et unique ce terminal par rapport aux autres terminaux. Ce discriminant peut être par exemple une applet, un fichier ou une donnée.

Dans le cas de l'applet, un programme est installé dans chaque UICC. Ce programme fonctionne de manière différente d'un UICC à un autre. Il peut par exemple s'agir d'un programme générant un OTP (One Time Password) au niveau de l'UICC. Le réseau, quant à lui, génère le même OTP lorsqu'il souhaite communiquer avec cet UICC. Si les OTP sont identiques (comparaison au niveau de l'UICC), il est considéré que le terminal adressé par le réseau est celui dans lequel se situe l'UICC. Dans le cas contraire, l'UICC ignore la requête du réseau.

Dans le cas d'un fichier, une personnalisation spécifique de chaque UICC est nécessaire : chaque UICC comprend un fichier comprenant des données qui lui sont propres. Lors de la tentative d'établissement d'une communication entre le réseau et l'UICC, il est vérifié si le fichier contenu dans l'UICC est celui correspondant à celui enregistré au niveau du réseau.

Enfin, dans le cas d'une donnée, il peut par exemple s'agir de l'ICCID de l'UICC, l'ICCID étant le numéro de série de l'UICC. Il peut également s'agir d'un numéro attribué à cet UICC par un prestataire de services qui fournit à l'abonné l'UICC, soit physiquement, et dans quel cas l'UICC est extractible du terminal associé, soit par un moyen de communication (OTA, IP, WLAN, Wifi, Bluetooth, IRDA, ...) ne nécessitant pas de fonctionnalité SIM extractible. Le numéro est alors inscrit dans l'UICC par ce moyen de communication. Dans les deux cas, l'UICC compare l'identifiant transmis par le réseau avec l'identifiant qu'il contient.

Dans tous les cas précités, le discriminant peut être contenu ou généré soit dans le terminal, dans son modem, ou dans l'UICC.

Comme il sera vu par la suite, il est également possible d'adresser un terminal donné, grâce à son identifiant, malgré le fait que tous les terminaux comprennent le même UICC (les IMSI des UICC sont identiques).

Selon un troisième mode de mise en oeuvre de l'invention, en partant du principe que les terminaux sont fixes, la discrimination entre plusieurs terminaux renfermant des UICC ayant les mêmes identifiants (IMSI, Ki), est faite sur une base de localisation géographique : le réseau étant un réseau cellulaire, celui-ci est constitué de cellules, tel que représenté à la figure 4.

Le réseau 40 représenté comporte ici dix cellules. La couverture radio de chaque cellule est assurée par une station de base. Lors de l'installation de terminaux comprenant des UICC identiques, on s'arrange pour que dans une cellule donnée, il n'y ait qu'une seule UICC ayant le même identifiant. Dans le réseau 40, dix UICC identiques peuvent donc être utilisées. Les dix UICC peuvent communiquer simultanément avec l'infrastructure du réseau, la discrimination entre ces UICC étant réalisée en fonction de la station de base relayant le signal (Cell ID). De même, le réseau peut adresser simultanément les dix UICC puisqu'il ne peut y avoir de collision entre des messages transmis à des UICC situés dans des cellules différentes.

Dans le sens descendant, le réseau a en fait deux moyens pour s'adresser aux UICC :
- il peut effectuer du « cell broadcast » sur une seule cellule et s'adresser ainsi à l'UICC ayant l'IMSI correspondant dans cette cellule;
- il peut s'adresser à toutes les cellules du réseau et demander à un UICC 'x' située dans une cellule 'y' d'entrer en communication avec lui. Tous les UICC ayant l'IMSI 'x' recevront le message mais seul celui situé dans la cellule 'y' répondra à ce message. A cet effet, une applet est prévue dans chaque UICC pour reconnaitre dans quelle cellule il se situe. L'applet connaît l'identité de la cellule qui lui est transmise par le réseau lors de l'établissement de la communication.

Cette discrimination géographique s'applique aux terminaux fixes ou semi-fixes (terminaux ayant peu de mobilité). L'essentiel est qu'un terminal donné n'entre pas dans une cellule où se situe un autre terminal ayant le même UICC.

L'invention concerne également un procédé d'interrogation d'un terminal dans un réseau de télécommunications cellulaire, ce terminal étant fixe (par exemple un feu rouge) ou mobile (un véhicule automobile par exemple). Encore une fois, les UICC renfermés dans les terminaux sont identiques (mêmes IMSI et Ki) et un seul abonnement (une seule ligne dans le HLR) leur est affecté. On peut par exemple imaginer que tous les véhicules d'une marque donnée sont équipés du même UICC, celui-ci étant raccordé à un modem compris dans le véhicule. Le modem ou le véhicule comprennent un identifiant (de modem ou de véhicule), par exemple le numéro d'immatriculation de ce véhicule.

En cas de vol d'un véhicule, son propriétaire peut demander à ce que son véhicule soit repéré, par exemple par géolocalisation cellulaire ou par GPS. Il contacte à cet effet l'opérateur gérant le réseau qui transmet simultanément à tous les véhicules une requête de position, cette requête comprenant l'identifiant (le numéro d'immatriculation) du véhicule recherché. Tous les UICC reçoivent alors la requête et comparent l'identifiant compris dans la requête avec l'identifiant du modem (véhicule) auquel ils sont connectés. Si l'identifiant ne correspond pas, l'UICC n'effectue aucune action. En revanche, si l'identifiant correspond, cela signifie que le véhicule dans lequel est compris cet UICC est celui recherché. L'UICC répond alors à la requête, par exemple en transmettant la position du véhicule, obtenue par géolocalisation par station de base ou par GPS (intégré de préférence). Comme vu précédemment, cet élément discriminant peut être un nombre, un fichier, une application, dans le véhicule, dans le modem ou dans l'UICC.

L'avantage de ce mode de mise en oeuvre est qu'un seul et unique abonnement (un seul IMSI/Ki) peut être utilisé pour la localisation de tous les véhicules d'un ou de plusieurs constructeurs. On peut même imaginer n'utiliser qu'un seul abonnement pour tous les véhicules circulant dans un pays donné. Les UICC compris dans les différents véhicules sont identiques, seul l'identifiant du modem intégré dans un véhicule ayant besoin d'être différent d'un modem intégré dans un autre véhicule. L'identifiant du modem peut être son numéro de série, correspondant par exemple à un IMEI, ou alors personnalisable (de préférence de manière sécurisée) lors de l'immatriculation du véhicule (l'identifiant est alors par exemple le numéro d'immatriculation du véhicule).

L'exemple précédent a été donné pour le sens descendant, mais est également valable pour le sens montant : un terminal désirant communiquer avec le réseau transmet vers le réseau un message, ce message comprenant un identifiant du terminal. Il peut par exemple s'agir d'un message indiquant qu'un accident vient de se produire, avec une localisation géographique du terminal appelant. Le réseau identifie alors quel terminal a émis le message, à l'aide de l'identifiant de terminal compris dans le message.

De même que précédemment, les discriminations, qu'elles soient réalisées sur la base de communications montantes ou descendantes, peuvent être réalisées sur la base de données (nombre, fichier ou application) figurant dans le terminal, le modem ou l'UICC.

L'IMSI n'est pas nécessairement l'identifiant utilisé pour identifier un UICC. Il est par exemple possible d'utiliser l'ICCID qui correspond au numéro de téléphone de l'abonné (et qui lui aussi est unique).

Les différents modes de réalisation décrits ci-dessus permettent tous de limiter le nombre d'identifiants d'UICC à enregistrer au niveau des HLR d'un réseau de télécommunications cellulaire. L'invention permet également de simplifier la personnalisation de ces UICC puisqu'ils sont tous identiques (lorsque le discriminant n'est pas dans l'UICC).

## Revendications

1. Procédé de transmission de données dans un réseau de télécommunications cellulaire, lesdites données étant transmises entre ledit réseau (23) et des terminaux (20₁, 20₂, 20ₙ) comprenant chacun un UICC (22₁, 22₂, 22ₙ) renfermant un identifiant (IMSI), **caractérisé en ce que** les identifiants des UICC (22₁, 22₂, 22ₙ) d'une pluralité desdits terminaux (20₁, 20₂, 20ₙ) sont identiques et **en ce qu'**il consiste à transmettre lesdites données à l'aide d'un discriminant permettant d'identifier chacun desdits terminaux (20₁, 20₂, 20ₙ) de manière univoque.

2. Procédé selon la revendication 1, **caractérisé en ce que** ledit discriminant est temporel, à chaque UICC étant affecté un créneau temporel (TS₁, TS₂, TSₙ) pendant lequel il communique avec ledit réseau (23).

3. Procédé selon la revendication 2, **caractérisé en ce qu'**il consiste à transmettre un signal temporel à chaque terminal (20₁, 20₂, 20ₙ) pendant le créneau temporel (TS₁, TS₂, TSₙ) affecté de manière univoque à ce terminal (20₁, 20₂, 20ₙ).

4. Procédé selon la revendication 2, **caractérisé en ce qu'**il consiste à synchroniser lesdits terminaux (20₁, 20₂, 20ₙ) pendant un intervalle de temps pendant lequel lesdits UICC (22₁, 22₂, 22ₙ) sont tous activés simultanément.

5. Procédé selon la revendication 1, **caractérisé en ce que** ledit discriminant est un identifiant dudit terminal (IMEI).

6. Procédé selon la revendication 1, **caractérisé en ce que** ledit discriminant est un identifiant du modem (21₁, 21₂, 21ₙ) auquel est connecté chaque UICC (22₁, 22₂, 22ₙ), ledit modem (21₁, 21₂, 21ₙ) communiquant avec ledit terminal (20₁, 20₂, 20ₙ).

7. Procédé selon l'une des revendications 5 et 6, **caractérisé en ce que** ledit identifiant de terminal (20₁, 20₂, 20ₙ) est un nombre.

8. Procédé selon l'une des revendications 5 et 6, **caractérisé en ce que** ledit identifiant de terminal (20₁, 20₂, 20ₙ) est un fichier.

9. Procédé selon l'une des revendications 5 et 6, **caractérisé en ce que** ledit identifiant de terminal (20₁, 20₂, 20ₙ) est une application.

10. Procédé selon la revendication 1, **caractérisé en ce que** ledit discriminant est l'identité de la cellule dans laquelle est situé ledit terminal (20₁, 20₂, 20ₙ), chaque cellule dudit réseau (23) ne comportant qu'un terminal (20₁, 20₂, 20ₙ) comprenant un UICC (22₁, 22₂, 22ₙ) ayant le même identifiant.

11. Procédé selon la revendication 10, **caractérisé en ce qu'**il consiste à transmettre vers ledit réseau (23) à partir de chaque UICC (22₁, 22₂, 22ₙ) ladite identité de la cellule dans lequel se situe cet UICC (22₁, 22₂, 22ₙ) et à identifier chacun desdits UICC (22₁, 22₂, 22ₙ) au niveau dudit réseau (23) à partir de ladite identité de cellule transmise.

12. Procédé selon la revendication 10, **caractérisé en ce qu'**il consiste à transmettre une requête à partir dudit réseau (23) vers tous les UICC (22₁, 22₂, 22ₙ) d'une même cellule, ladite requête comprenant un identifiant d'un UICC (22₁, 22₂, 22ₙ), et à répondre à ladite requête par l'UICC (22₁, 22₂, 22ₙ) ayant l'identifiant correspondant.

13. Procédé selon la revendication 10, **caractérisé en ce qu'**il consiste à transmettre une requête à partir dudit réseau (23) vers tous les UICC (22₁, 22₂, 22ₙ) d'une pluralité de cellules, ladite requête comprenant une identité de cellule, et à répondre à ladite requête par l'UICC (22₁, 22₂, 22ₙ) situé dans la cellule ayant l'identité de cellule correspondante.

14. Procédé selon l'une des revendications 1 à 13, **caractérisé en ce que** lesdits UICC (22₁, 22₂, 22ₙ) sont intégrés de manière fixe dans lesdits terminaux (20₁, 20₂, 20ₙ).
